# EUROPEAN PATENT SPECIFICATION

(11) **EP 1 758 221 B1**
(45) Date of publication and mention of the grant of the patent: **02.01.2008**
(21) Application number: 06076612.8
(22) Date of filing: 23.08.2006
(51) Int. Cl.: H02G 3/12

(54) **Flush junction box including antenna**
Einbaudose mit Antenne
Boîtier à affleurement avec antenne

(30) Priority: 24.08.2005 NL 1029795
(43) Date of publication of application: 28.02.2007
(73) Proprietor: ABB B.V., 6716 AA Ede (NL)
(72) Inventor: Witte, Adriaan Marinus, 3436 HT Nieuwegein (NL)
(74) Representative: Ferguson, Alexander

(56) References cited:
- WO-A-99/26086
- DE-C- 19 812 185
- US-B1- 6 839 244

## Description

### BACKGROUND OF THE INVENTION

The invention relates to the field of flush junction boxes for electric (domestic) installations.

After placing the flush junction box and after installing conduits in the wall, the flush junction box is covered by a lid, after which the wall is plastered. The flush junction box is then covered by the layer of plaster. When at a later moment the electrician wants to use the flush junction box, he will have to try to trace the flush junction box in the wall. This may for instance be done by tapping the wall and listening where the flush junction box is. However, this is laborious and time-consuming.

It is known to utilise lids with metal containing parts that can be tracked down with a metal detector. To locate the flush junction box, however, a relatively large quantity of metal is necessary, the detection by the metal detector moreover possibly being disrupted by for instance little screws in the flush junction box itself, or by the concrete reinforcement in the wall.

WO 99/26089 discloses an electrical wiring box according to the preamble of claim 1.

It is an object of the invention to improve on at least one of the said aspects.

It is an object of the invention to provide a flush junction box of which the position in a wall can be accurately located.

### SUMMARY OF THE INVENTION

The invention provides, from one aspect, a flush junction box according to claim 1.

An antenna may be active or detectable in a narrow wavelength range or frequency range. The antenna may be perceivable and distinguishable when it is placed in an electromagnetic field, for instance by induction, resonance, or generating an electromagnetic field, optionally using a harmonic frequency. The antenna of the flush junction box therefore can be distinguished from for instance little screws in the flush junction box or concrete reinforcement in a wall. A flush junction box can therefore be effectively tracked down, as a result of which its location in for instance a wall can be accurately established. On the building site the antenna may be connected to only those flush junction boxes that need to be detected, or be connected to for instance only one box of a row of flush junction boxes to be built in.

Flush junction boxes also include casting junction boxes which regard flush junction boxes that are attached to the shuttering when concrete is cast in order to be thus accommodated in a concrete wall.

In a first development the antenna comprises a loop of electrically conductive material. Due to its circumference a loop is able to effectively receive an electromagnetic field in a specific direction. Alternatively the antenna may have the shape of a rod.

Preferably the antenna or the loop of the antenna is connected to the lid of the flush junction box. In the condition in which it has been built in the lid is relatively close to the layer of plaster, as a result of which detection of the antenna is properly possible.

In one simple embodiment the sticker is attached to the lid of the flush junction box.

Alternatively the antenna or the loop of the antenna is incorporated in the lid of the flush junction box. The antenna may therefore be incorporated in the lid during the manufacturing of the lid.

If the antenna or the loop of the antenna extends parallel to a bottom of the flush junction box, the interaction with an electromagnetic field in the built-in condition of the wall will be optimal in a direction transverse to the wall, which is advantageous for detection of the antenna, wherein a detection device can be held in front of the wall.

Preferably the antenna or the loop of the antenna is centred with respect to the flush junction box. The position of the antenna thus forms a centre position of the flush junction box, for instance the lid. An electrician is therefore able to remove the lid by smashing it at said centre position using a hammer.

The interaction and/or detection using an electromagnetic field can be further optimised when the antenna or the loop of the antenna has a pre-determined length. The length of the antenna may therefore be adjusted to a specific, known detection frequency of the electromagnetic field, as a result of which the antenna can be clearly distinguishable from interference sources such as said little screws or concrete reinforcement.

An available surface for the antenna may be effectively utilised when the antenna comprises a coil of several loops or windings of electrically conductive material.

The antenna or the loop or the coil of the antenna can be effected using standard available electronic detection means or components thereof when the shape of the antenna or the loop or coil of the antenna is adjusted to detection using an electromagnetic field having a frequency within a range of 4-14 MHz, preferably having a frequency of within a narrow wavelength range around 4.7 MHz and/or 8.2 MHz and/or 13.56 MHz.

In a further development the antenna is a part of a transponder of the flush junction box. A transponder works on the basis of reception and transmission of electromagnetic waves, usually with accurately fixed frequencies, which renders the transponder and as a result the junction box highly accurately detectable and distinguishable.

Preferably the transponder is adapted to be wirelessly active with respect to an external energy source. As a result the transponder can be autonomously active within the flush junction box.

Preferably the transponder is a RFID transponder. An advantage thereof is that RFID transponders (Radio Frequency IDentification transponders) are standard available. Such a RFID transponder can be detected using a suitable detection device. Due to the identification possibilities of the transponder a distinction can then be made between for instance flush junction boxes intended for for instance a wall socket or a telephone connection, so that the correct flush junction box is made free from a layer of plaster. Moreover at a short distance from the transponder, using a same detection device, the location of the junction box can be highly accurately determined by bringing the antennas of the transponder and the detection device in mutual projection on the basis of measuring the strength of the electromagnetic waves sent back to the detection device.

The invention furthermore provides, according to a further aspect, a detection device for a flush junction box according to the invention, wherein the detection device comprises electromagnetic detection means for detecting and locating the antenna and/or transponder of the flush junction box.

Preferably the detection device comprises reference means for indicating the location of the flush junction box with respect to the detection device. Such a reference means may for instance be a cross, of which the ends can be marked off on the wall for marking off the location of the flush junction box in the wall.

Using visual and/or auditive aids, the said reference means can be brought at the correct position with respect to the antenna if the detection device comprises a lamp and/or a LED and/or a sound generator that is activated when detecting the antenna and/or transponder, wherein the lamp and/or LED preferably is situated in a centre of the reference means, such as for instance the centre of the said cross.

Preferably the detection device is portable, preferably by hand, preferably in the hand. Such a detection device can easily be moved along a wall by an electrician.

When the detection device comprises a pressure switch for keeping the detection device switched on by keeping the switch pushed in, a portable energy source of the device, such as a battery, can be saved on by only activating the device when it is really necessary.

The invention furthermore, from a further aspect, provides an assembly of a detection device according to the invention and a sticker according to the invention.

The invention furthermore, from a further aspect, provides a method for determining the location of a flush junction box in a wall, wherein the flush junction box comprises an antenna for detection of the flush junction box, wherein the method comprises moving detection means along the wall and thus generating an electromagnetic field for detecting the location of the antenna of the flush junction box in the wall.

### SHORT DESCRIPTION OF THE DRAWINGS

The invention will be elucidated on the basis of a number of exemplary embodiments shown in the attached drawings, in which:
Figures 1 and 2 show an isometric view of a flush junction box according to the invention, having a sticker with coil at the inside of the lid;
Figure 3 shows a top view of the sticker in the junction box according to figures 1 and 2;
Figure 4 shows the flush junction box shown in figures 1 and 2, built in into a wall covered with a layer of plaster; and
Figure 5 shows a portable detection device with which the sticker with coil according to the preceding figures can be detected.

### DETAILED DESCRIPTION OF THE DRAWINGS

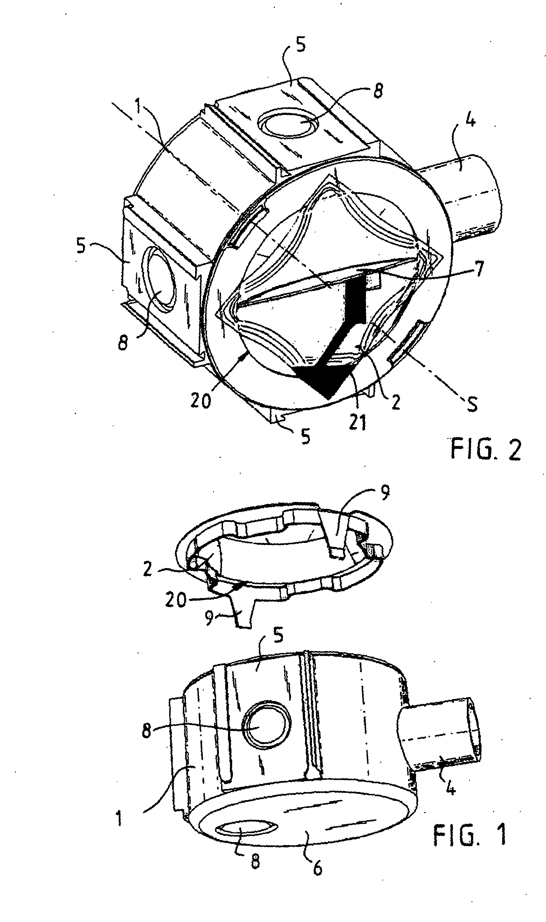

The flush junction box as shown in figures 1 and 2 is of the usual type having a bottom 6, a spout 4 for connection to installation pipes, coupling surfaces 5 and break-out gates 8. The lid 2 has an engagement ridge 7 in order to be able to detach the lid 2 from the flush junction box 1 and is furthermore provided with legs 9 for securing and positioning the lid 2 in the flush junction box 1. Against the inside of the lid 2 according to the invention a synthetic sticker 20 has been arranged (alternatively the sticker 20 can be attached to the outside of the lid 2).

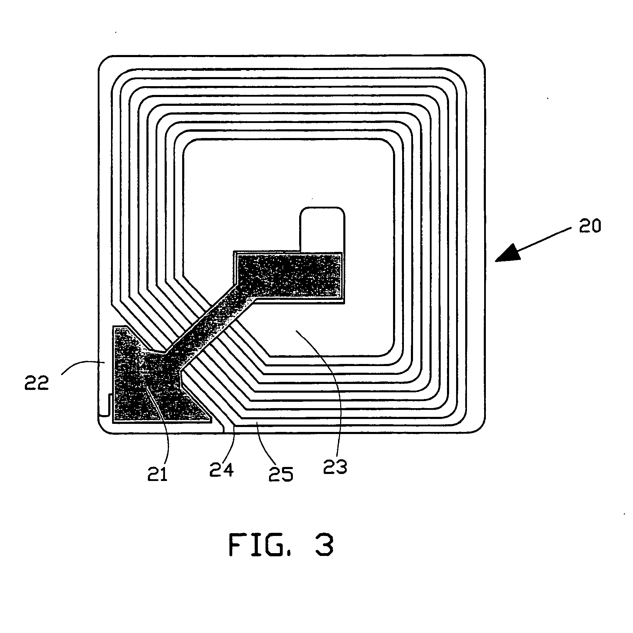

Figure 3 shows the sticker 20 in detail. The sticker 20 comprises an adhesive bottom layer that is not shown and a top layer of electrically conductive material, such as copper or aluminium. By arranging grooves 24 a continuous and helical track 25 is situated in the top layer, having a beginning 22 situated at the vertex of the sticker 20 and centrally positioned end portion 23. The beginning 22 and the end portion 23 are connected so as to be electrically conductive to a bridge strip 21. The track 25 and the bridge portion 21 form an optionally closed loop or (antenna) coil in the plane of the sticker 20. Due to the flat construction and the material used, the sticker 20 is particularly lightweight.

The sticker 20 and thus the track 25 are centred around the centre according to centre line S of the flush junction box 1. The track 25 and the bridge portion 21 have an accurately determined length and are suitable for being accurately detected, on the basis of detection principles that are known per se, when placing the sticker 20 in a high-frequency electromagnetic field, for instance having a frequency of 4.7 MHz. The detection may for instance be based on generating a resonance of an electromagnetic counter field having a harmonic frequency of the transmitted high-frequency electromagnetic field.

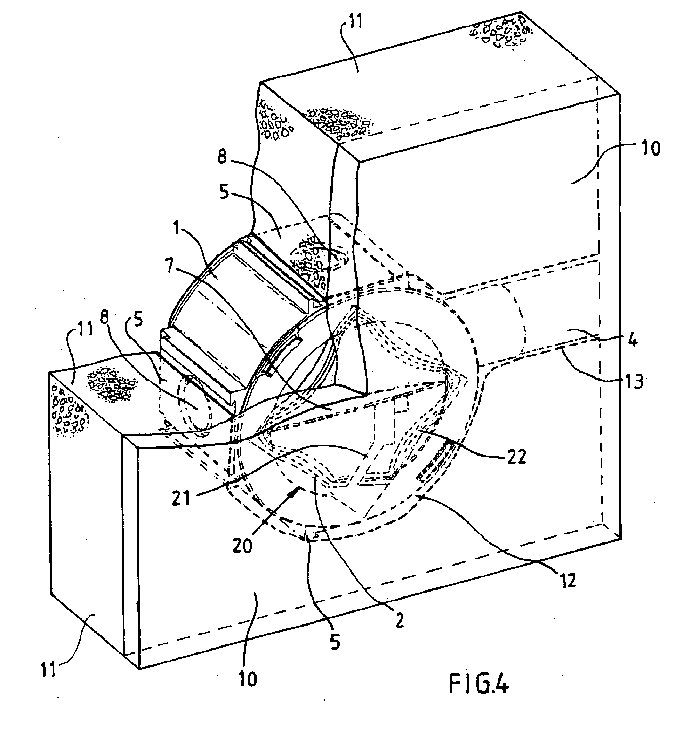

Figure 4 shows the flush junction box 1 that has been built in into a recess 12 in a brick wall 11, wherein the spout 4 and an installation pipe that is not further shown are situated in a slot in the wall 11. The flush junction box 1 is concealed behind a layer of plaster 10. The sticker 20 in that case sits recessed some millimetres to some centimetres behind the layer of plaster 10.

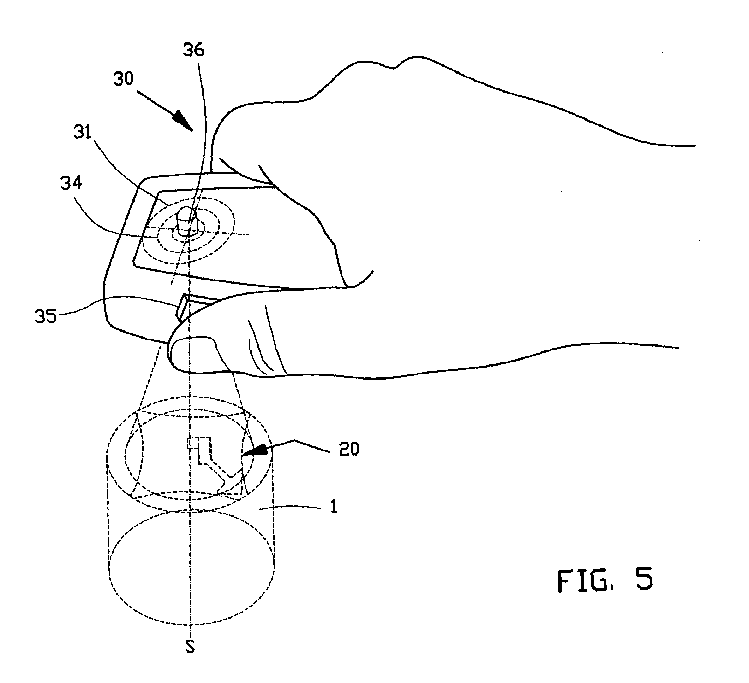

Figure 5 shows a manually operated and hand-portable detection device 30 for detecting the sticker 20. The detection device 30 comprises an electric circuit that is not shown and an (antenna) coil that is not shown, which in the position shown of the detection device 30 with respect to the flush junction box 1, is situated substantially parallel to the plane of the track 25 of the sticker 20 for an optimal transmission of an electromagnetic field between the sticker 20 and the detection device 30. The detection device 30 and the sticker 20 have been adapted to mutual communication within a range of several centimetres, for instance five centimetres. The detection device 30 is battery-operated and is switched on as long as the pressure switch 35 is kept pushed in.

The detection device 30 is provided with a marking 31 having two crossing lines 34 of which the intersection coincides with the centre of the antenna which is not shown of the detection device. The crossing lines thus form a measure for the centre according to the centre line S of the lid 2 of the flush junction box. In the intersection of the crossing lines 34 a LED 36 has been placed which will light up in case of a certain degree of detection of the sticker 20. A beep will also be heard then.

By switching the detection device 30 on and aiming at the wall 11 within several centimetres from the probable location of the invisible flush junction box 1, the transmitted electromagnetic field can be picked up by the sticker 20, resulting in detection of the sticker 20. The LED 36 will light up and a beep will be heard.

The location of the flush junction box 1 can be exactly determined by moving the detection device 30 along the wall 11, in several directions above the flush junction box 1, until the sticker 20 is situated right across the coil of the detection device 30. As the sticker 20 has been arranged at the location of the centre of the flush junction box 1, the centre of the sticker 20 is an indication of the centre of the flush junction box 1. Said indication can be marked off on the wall 11 by the electrician, by using the crossing lines 34.

Subsequently the layer of plaster 10 situated over the flush junction box 1, insofar as necessary, can be removed in order to gain access to the flush junction box 1. The lid 2 can be smashed and removed, after which wires can be drawn and switch material can be mounted. Damage to the remaining part of the layer of plaster 10 and/or the wall 11 is thus prevented.

Alternatively an RFID (Radio Frequency IDentification) transponder can be incorporated in the sticker 20, with which on the basis of the electromagnetic field sent back by the transponder, apart from the location of the junction box 1 also the identity of the junction box 1 can be established. Therefore distinction can be made between junction boxes for for instance mains voltage or for telecommunication.

## Claims

1. Flush junction box (1) comprising an antenna (25) for detecting the flush junction box (1) by means of an electromagnetic field, **characterised in that** the antenna (25) is connected to a sticker (20) attached to the flush junction box (1).

2. Flush junction box (1) according to claim 1, wherein the sticker (20) is attached to the lid (2) of the flush junction box (1).

3. Flush junction box (1) according to any one of the preceding claims, wherein the antenna (25) is connected to the lid (2) of the flush junction box (1).

4. Flush junction box (1) according to any one of the claims 1-3, wherein the antenna (25) comprises a loop of electrically conductive material.

5. Flush junction box (1) according to any one of the preceding claims, wherein the antenna (25) is incorporated in the lid (2) of the flush junction box (1).

6. Flush junction box (1) according to any one of the preceding claims, wherein the antenna (25) or a loop thereof extends parallel to a bottom (6) of the flush junction box (1).

7. Flush junction box (1) according to any one of the preceding claims, wherein the antenna (25) or a loop thereof is centred with respect to the flush junction box (1).

8. Flush junction box (1) according to any one of the preceding claims, wherein the antenna (25) or a loop thereof has a pre-determined length.

9. Flush junction box (1) according to any one of the preceding claims, wherein the antenna (25) comprises a coil of several loops or windings of electrically conductive material.

10. Flush junction box (1) according to any one of the preceding claims, wherein the shape of the antenna (25) is adjusted to detection using an electromagnetic field having a frequency within a range of 4-14 MHz, preferably having a frequency of within a narrow wavelength range around 4.7 MHz and/or 8.2 MHz and/or 13.56 MHz.

11. Flush junction box (1) according to any one of the preceding claims, wherein the antenna (25) is a part of a transponder of the flush junction box (1), wherein the transponder preferably is adapted to be wirelessly active with respect to an external energy source, wherein the transponder preferably is a RFID transponder.

12. Detection device (30) for a flush junction box (1) according to any one of the preceding claims, wherein the detection device (30) comprises electromagnetic detection means for detecting and locating the antenna (25) and/or transponder of the flush junction box (1), wherein the detection device (30) preferably comprises reference means (31, 34) for indicating the location of the flush junction box (1) with respect to the detection device (30), wherein the detection device preferably comprises a lamp and/or a LED (36) and/or a sound generator that is activated when detecting the antenna (25) and/or transponder, wherein the lamp and/or LED (36) preferably is situated in a centre of the reference means (31, 34).

13. Detection device (30) according to claim 12, wherein the detection device (30) is portable, preferably by hand, preferably in the hand, wherein the detection device (30) preferably comprises a pressure switch (35) for keeping the detection device (30) switched on by keeping the switch (35) pushed in.

14. Assembly of a detection device (30) according to claim 12 or 13 and a sticker (20) with an antenna (25) according to any one of the preceding claims.

## Patentansprüche

1. Unterputz-Verteilerdose (1), die eine Antenne (25) zum Erfassen der Unterputz-Verteilerdose (1) mittels eines elektromagnetischen Feldes umfasst, **dadurch gekennzeichnet, dass** die Antenne (25) mit einem Aufkleber (20) verbunden ist, der an der Unterputz-Verteilerdose (1) angebracht ist.

2. Unterputz-Verteilerdose nach Anspruch 1, wobei der Aufkleber (20) an dem Deckel (2) der Unterputz-Verteilerdose (1) angebracht ist.

3. Unterputz-Verteilerdose (1) nach einem der vorangehenden Ansprüche, wobei die Antenne (25) mit dem Deckel (2) der Unterputz-Verteilerdose (1) verbunden ist.

4. Unterputz-Verteilerdose (1) nach einem der Ansprüche 1-3, wobei die Antenne (25) eine Schleife aus elektrisch leitendem Material umfasst.

5. Unterputz-Verteilerdose (1) nach einem der vorangehenden Ansprüche, wobei die Antenne (25) in den Deckel (2) der Unterputz-Verteilerdose (1) integriert ist.

6. Unterputz-Verteilerdose (1) nach einem der vorangehenden Ansprüche, wobei die Antenne (25) oder eine Schleife derselben sich parallel zu einem Boden (6) der Unterputz-Verteilerdose (1) erstreckt.

7. Unterputz-Verteilerdose (1) nach einem der vorangehenden Ansprüche, wobei die Antenne (25) oder eine Schleife derselben in Bezug auf die Unterputz-Verteilerdose (1) zentriert ist.

8. Unterputz-Verteilerdose (1) nach einem der vorangehenden Ansprüche, wobei die Antenne (25) oder eine Schleife derselben eine vorgegebene Länge hat.

9. Unterputz-Verteilerdose (1) nach einem der vorangehenden Ansprüche, wobei die Antenne (25) eine Windung aus mehreren Schleifen oder Wicklungen aus elektrisch leitendem Material umfasst.

10. Unterputz-Verteilerdose (1) nach einem der vorangehenden Ansprüche, wobei die Form der Antenne (25) an Erfassung unter Verwendung eines elektromagnetischen Feldes mit einer Frequenz in einem Bereich von 4-14 MHz, vorzugsweise einer Frequenz innerhalb eines schmalen Wellenlängenbereiches um 4,7 MHz und/oder 8,2 MHz und/oder 13,56 MHz herum, angepasst ist.

11. Unterputz-Verteilerdose (1) nach einem der vorangehenden Ansprüche, wobei die Antenne (25) ein Teil eines Transponders der Unterputz-Verteilerdose (1) ist und der Transponder vorzugsweise so eingerichtet ist, dass er in Bezug auf eine externe Energiequelle drahtlos aktiv ist, wobei der Transponder vorzugsweise ein RFID-Transponder ist.

12. Erfassungsvorrichtung (30) für eine Unterputz-Verteilerdose (1) nach einem der vorangehenden Ansprüche, wobei die Erfassungsvorrichtung (30) eine elektromagnetische Erfassungseinrichtung zum Erfassen und Lokalisieren der Antenne (25) und/oder einen Transponder der Unterputz-Verteilerdose (1) umfasst, die Erfassungsvorrichtung (30) vorzugsweise Bezugseinrichtungen (31, 34) zum Anzeigen der Position der Unterputz-Verteilerdose (1) in Bezug auf die Erfassungsvorrichtung (30) umfasst und die Erfassungsvorrichtung vorzugsweise eine Lampe und/oder eine LED (36) und/oder eine Tonerzeugungseinrichtung umfasst, die aktiviert wird, wenn die Antenne (25) und/oder der Transponder erfasst werden, wobei sich die Lampe und/oder LED (36) vorzugsweise in einer Mitte der Bezugseinrichtung (31, 34) befindet.

13. Erfassungsvorrichtung (30) nach Anspruch 12, wobei die Erfassungsvorrichtung (30) vorzugsweise mit der Hand getragen werden kann und die Erfassungsvorrichtung (30) vorzugsweise einen Druckschalter (35) umfasst, mit dem die Erfassungsvorrichtung (30) angeschaltet gehalten wird, indem der Schalter (35) eingedrückt gehalten wird.

14. Baueinheit aus einer Erfassungsvorrichtung (30) nach Anspruch 12 oder 13 und einem Aufkleber (20) mit einer Antenne (25) nach einem der vorangehenden Ansprüche.

## Revendications

1. Boîte de dérivation encastrable (1) comportant une antenne (25) pour détecter la boîte de dérivation encastrable (1) par l'intermédiaire d'un champ électromagnétique, **caractérisée en ce que** l'antenne (25) est reliée à un autocollant (20) fixé sur la boîte de dérivation encastrable (1).

2. Boîte de dérivation encastrable (1) selon la revendication 1, dans laquelle l'autocollant (20) est fixé sur le couvercle (2) de la boîte de dérivation encastrable (1).

3. Boîte de dérivation encastrable (1) selon l'une quelconque des revendications précédentes, dans laquelle l'antenne (25) est reliée au couvercle (2) de la boîte de dérivation encastrable (1).

4. Boîte de dérivation encastrable (1) selon l'une quelconque des revendications 1 à 3, dans laquelle l'antenne (25) comprend une boucle d'un matériau électriquement conducteur.

5. Boîte de dérivation encastrable (1) selon l'une quelconque des revendications précédentes, dans laquelle l'antenne (25) est incorporée dans le couvercle (2) de la boîte de dérivation encastrable (1) .

6. Boîte de dérivation encastrable (1) selon l'une quelconque des revendications précédentes, dans laquelle l'antenne (25) ou une boucle de celle-ci s'étend parallèlement au fond (6) de la boîte de dérivation encastrable (1).

7. Boîte de dérivation encastrable (1) selon l'une quelconque des revendications précédentes, dans laquelle l'antenne (25) ou une boucle de celle-ci est centrée par rapport à la boîte de dérivation encastrable (1).

8. Boîte de dérivation encastrable (1) selon l'une quelconque des revendications précédentes, dans laquelle l'antenne (25) ou une boucle de celle-ci a une longueur prédéterminée.

9. Boîte de dérivation encastrable (1) selon l'une quelconque des revendications précédentes, dans laquelle l'antenne (25) comprend une bobine de plusieurs boucles ou enroulements de matériau électriquement conducteur.

10. Boîte de dérivation encastrable (1) selon l'une quelconque des revendications précédentes, dans laquelle la forme de l'antenne (25) est ajustée pour être détectée en utilisant un champ électromagnétique ayant une fréquence située dans une plage de 4 à 14 MHz, ayant de préférence une fréquence dans une plage de longueurs d'onde étroite située autour de 4,7 MHz et/ou 8,2 MHz et/ou 13,56 MHz.

11. Boîte de dérivation encastrable (1) selon l'une quelconque des revendications précédentes, dans laquelle l'antenne (25) est une partie d'un émetteur-récepteur de la boîte de dérivation encastrable (1), l'émetteur-récepteur étant de préférence adapté pour être radioélectriquement actif par rapport à une source d'énergie externe, dans laquelle l'émetteur-récepteur est de préférence un émetteur-récepteur d'identification par radiofréquence (RFID).

12. Dispositif de détection (30) d'une boîte de dérivation encastrable (1) selon l'une quelconque des revendications précédentes, dans lequel le dispositif de détection (30) comporte des moyens de détection électromagnétiques pour détecter et localiser l'antenne (25) et/ou un émetteur-récepteur de la boîte de dérivation encastrable (1), le dispositif de détection (30) comportant de préférence des moyens de référence (31, 34) pour indiquer l'emplacement de la boîte de dérivation encastrable (1) par rapport au dispositif de détection (30), le dispositif de détection comportant de préférence une lampe et/ou une diode électroluminescente LED (36) et/ou un générateur de son qui est activé lors de la détection de l'antenne (25) et/ou de l'émetteur-récepteur, la lampe et/ou la LED (36) étant de préférence située au centre des moyens de référence (31, 34).

13. Dispositif de détection (30) selon la revendication 12, dans lequel le dispositif de détection (30) est portable, de préférence à la main, de préférence dans la main, le dispositif de détection (30) comportant de préférence un commutateur à pousser (35) pour maintenir le dispositif de détection (30) actif en maintenant le commutateur (35) poussé vers l'intérieur.

14. Ensemble comprenant un dispositif de détection (30) selon la revendication 12 ou 13 et d'un autocollant (20) ayant une antenne (25) selon l'une quelconque des revendications précédentes.
